# EUROPEAN PATENT SPECIFICATION

(11) **EP 4 172 263 B1**
(45) Date of publication and mention of the grant of the patent: **21.08.2024**
(21) Application number: 21735318.4
(22) Date of filing: 28.06.2021
(51) Int. Cl.: C08L 23/12, H01Q 1/40, B29B 7/00, B29C 45/00

(54) **POLYMER COMPOSITION WITH IMPROVED FLOWABILITY AND FALLING WEIGHT IMPACT RESISTANCE AT LOW TEMPERATURE**
POLYMERZUSAMMENSETZUNG MIT VERBESSERTER FLIESSFÄHIGKEIT UND FALLGEWICHTSCHLAGFESTIGKEIT BEI NIEDRIGER TEMPERATUR
COMPOSITION POLYMÈRE PRÉSENTANT UNE MEILLEURE APTITUDE À L'ÉCOULEMENT ET UNE MEILLEURE RÉSISTANCE AUX CHOCS DE MASSE TOMBANTE À BASSE TEMPÉRATURE

(30) Priority: 29.06.2020 WO PCT/CN2020/098921; 28.09.2020 EP 20198829
(43) Date of publication of application: 03.05.2023
(73) Proprietor: SABIC Global Technologies B.V., 4612 PX Bergen op Zoom (NL)
(72) Inventor: HUANG, Ting, 6160 GA Geleen (NL); GREIN, Christelle, Marie, Helene, 6160 GA Geleen (NL); JIANG, Chaodong, 6160 GA Geleen (NL); GAO, Weisong, 6160 GA Geleen (NL)
(74) Representative: Sabic Intellectual Property Group
(86) International application number: PCT/EP2021/067668
(87) International publication number: WO 2022/002839

(56) References cited:
- EP-A1- 3 112 417
- WO-A1-2017/025268
- CN-A- 103 571 040

## Description

The present invention relates to a polymer composition comprising a polypropylene, an ethylene based elastomer, a grafted polypropylene and glass fiber. The present invention further relates to a process for the preparation of said polymer composition and to an article comprising the said polymer composition, the present invention further relates to the use of the polymer composition in an article.

Antenna housings are used in antenna stations to provide protection on antennas from the environment. Therefore, it is desirable that the antenna housings are made of polymer compositions with sufficient stiffness and high low temperature impact resistance to withstand extreme weathers, e.g. gale or hail. Another common requirement on the polymer compositions to be used in antenna housing is excellent flowability as the pieces of antenna housing are usually large and prepared by injection molding where excellent flowability is crucial to have the polymer composition fully filled the mold during the injection molding process. Measurement methods of flowability are known in the art, e.g. melt flow index (MFI) measurement and spiral flow measurement. In the context of the present invention, excellent flowability refers to excellent result in spiral flow measurement because spiral flow measurement represents better the flowability than MFI measurement under the injection molding condition.

Antenna housings based polymer compositions comprising polypropylene are known in the art, for instance:
EP 1852938 B1 discloses an antenna housing comprising an electromagnetic window portion through which electromagnetic signals are passed in use, wherein a layer of a wall of the electromagnetic window is formed from self reinforced polypropylene.

US 20170190884 A1 discloses a resin composition for a radar cover. The resin composition includes carbon nanotubes and a polymer resin. The resin composition does not interfere with the transmission of signals from a radar while protecting the radar from the surroundings.

There is still a need to provide a polymer composition with excellent spiral flow performance and falling weight impact resistance at low temperature.

This need is satisfied in the present invention by a polymer composition comprising a polypropylene, an ethylene based elastomer, a grafted polypropylene and glass fiber, wherein the polypropylene has a melt flow index (MFI) in the range from 17 to 68 dg/min as measured according to ISO1133-1:2011 at 230°C/2.16kg, wherein the amount of the ethylene based elastomer is in the range from 15.5 to 28.3 wt% based on the total amount of the polymer composition, wherein the MFI of the ethylene based elastomer is in the range of 0.8 to 36 dg/min as measured according to ISO1133-1:2011 at 190°C/2.16kg wherein amount of grafted polypropylene is in the range from 1.2 to 2.9 wt% based on the total amount of the polymer composition.

The inventors of the present invention surprisingly found that the composition according to the invention has excellent spiral flow performance and falling weight impact resistance at low temperature.

### Polypropylene

The polypropylene according to the invention is preferably a heterophasic propylene copolymer, wherein the heterophasic propylene copolymer may be prepared in one or more reactors, by polymerization of propylene in the presence of a catalyst and optionally subsequent polymerization of an ethylene-α-olefin mixture.

The polypropylene according to present invention can be produced using any conventional technique known to the skilled person, for example multistage process polymerization, such as bulk polymerization, gas phase polymerization, slurry polymerization, solution polymerization or any combinations thereof. Any conventional catalyst systems, for example, Ziegler-Natta or metallocene may be used. Such techniques and catalysts are described, for example, in WO06/010414; Polypropylene and other Polyolefins, by Ser van der Ven, Studies in Polymer Science 7, Elsevier 1990; WO06/010414, US4399054 and US4472524. Preferably, the polypropylene is made using Ziegler-Natta catalyst.

Preferably the polypropylene according to the invention comprises a propylene-based matrix and a dispersed ethylene-α-olefin copolymer.

Preferably the amount of the propylene-based matrix is from 60 to 99wt%, for example from 65 to 95 wt%, for example from 70 to 90wt%, for example from 75 to 85wt%, for example from 72 to 87wt% based on the total amount of the polypropylene.

Preferably the amount of the dispersed ethylene-α-olefin copolymer is from 40 to 1 wt%, for example from 35 to 5 wt%, for example from 30 to 10 wt%, for example from 28 to 13 wt%, based on the total amount of the polypropylene.

The total amount of the propylene-based matrix and the dispersed ethylene-α-olefin copolymer is preferably 100 wt%. The amount ratio between the propylene-based matrix and the dispersed ethylene-α-olefin copolymer is preferably in the range from 95:5 to 65:35, preferably from 90:10 to 70:30, preferably from 87:13 to 72:28.

The amounts of the propylene-based matrix and the dispersed ethylene-α-olefin copolymer may be determined by NMR, as well known in the art.

The propylene-based matrix may consists of a propylene homopolymer and/or a propylene- α-olefin copolymer consisting of at least 70 wt% of propylene and up to 30 wt% of ethylene and/or an α-olefin having 4 to 10 carbon atoms, for example a propylene- α-olefin copolymer consisting of at least 80 wt% of propylene and up to 20 wt% of ethylene and/or an α-olefin having 4 to 10 carbon atoms, for example consisting of at least 90 wt% of propylene and up to 10 wt% of ethylene and/or an α-olefin having 4 to 10 carbon atoms, based on the total amount of the propylene-based matrix.

The α-olefin in the propylene- α-olefin copolymer may be selected from the group ethylene and α-olefins having 4-10 carbon atoms, for example 1-butene, 1-pentene, 4-methyl-1-pentene, 1-hexen, 1-heptene, 1-octene and mixtures thereof, preferably the α-olefin in the propylene- α-olefin copolymer is ethylene.

Preferably, the propylene-based matrix is a propylene homopolymer.

The propylene-based matrix is preferably semi-crystalline, that is it is not 100% amorphous, nor is it 100% crystalline. For example, the propylene-based matrix is at least 40% crystalline, for example at least 50%, for example at least 60% crystalline and/or for example at most 80% crystalline, for example at most 70% crystalline. For example, the propylene-based matrix has a crystallinity of 60 to 70%. For purpose of the invention, the degree of crystallinity of the propylene-based matrix is measured using differential scanning calorimetry (DSC) according to ISO11357-1 and ISO11357-3 of 1997, using a scan rate of 10°C/min, a sample of 5mg and the second heating curve using as a theoretical standard for a 100% crystalline material 207.1 J/g.

The amount of ethylene in the ethylene-α-olefin copolymer is preferably in the range from 20 to 80wt% based on the ethylene-α-olefin copolymer, more preferably, the amount of ethylene in the ethylene-α-olefin copolymer is from 30 to 70 wt%, more preferably from 40 to 65 wt%, more preferably from 50 to 65 wt%, even more preferably from 55 to 65wt%.

Preferably, the α-olefin in the ethylene-α-olefin copolymer is propylene.

The MFI of the polypropylene is in the range from 17 to 68 dg/min, preferably in the range from 23 to 59 dg/min, more preferably in the range from 32 to 47 dg/min as measured according to ISO1133 (2.16 kg/230°C).

The amount of the polypropylene is preferably in the range from 26 to 76 wt%, preferably in the range from 33 to 62 wt%, more preferably in the range from 39 to 53 wt% based on the total amount of the polymer composition.

### Glass fibers

In general, glass fiber is a glassy cylindrical substance where its length is significantly longer than the diameter of its cross section. It is known that adding glass fibers is able to improve the mechanical performance (e.g. strength and stiffness) of polymeric resin. The level of performance improvement depends heavily on the properties of the glass fibers, e.g. diameter, length and surface property of the glass fiber.

For the purpose of the present invention, the diameter of the glass fibers is preferably in the range from 5 to 50 microns, preferable from 10 to 30 microns, more preferable from 15 to 25 microns.

It is also know that long glass fiber (length from 0.5 to 50 mm) is able to provide superior property improvement than short glass fiber (length shorter than 0.5 mm) to the composition. The length of glass fibers in the present invention depends heavily on the process used to prepare the said composition. Preferably the glass fiber in the polymer composition according to the invention are long glass fibers.

In the present invention, the amount of glass fibers is preferably in the range from 16 to 42 wt%, preferably in the range from 25 to 34 wt% based on the total amount of the polymer composition.

### Ethylene based elastomer

The polymer composition in the present invention further comprises an ethylene based elastomer.

The ethylene based elastomer is preferably selected from a group consisting of ethylene-butene copolymer, ethylene-hexene copolymer, ethylene-octene copolymer and mixtures thereof, preferably the polyolefin based elastomer is an ethylene-octene copolymer.

Preferably the density of the ethylene based elastomer is preferably in the range from 0.845 to 0.883 g/cm3, preferably in the range from 0.848 to 0.865 g/cm3, more preferably in the range from 0.853 to 0.860 g/cm3 as measured according to ASTM D792-13.

The MFI of the ethylene based elastomer is in the range from 0.8 to 36 dg/min, preferably in the range from 0.9 to 23 dg/min, more preferably in the range from 0.9 to 13 dg/min, even more preferably in the range from 0.9 to 4.8 dg/minas measured according to ISO1133-1:2011 at 190°C/2.16kg.

The shore A hardness of the ethylene based elastomer is preferably in the range from 35 to 90, preferably in the range from 42 to 69, more preferably in the range from 47 to 60, most preferably in the range from 50 to 57 as measured according to ASTM D2240-15, 1s..

Ethylene based elastomers which are suitable for use in the current invention are commercially available for example under the trademark EXACT^{™} available from Exxon Chemical Company of Houston, Texas or under the trademark ENGAGE^{™} polymers, a line of metallocene catalyzed plastomers available from Dow Chemical Company of Midland, Michigan or under the trademark TAFMER^{™} available from MITSUI Chemicals Group of Minato Tokyo or under the trademark Fortify^{™} and Cohere^{™} from SABIC.

The ethylene based elastomers may be prepared using methods known in the art, for example by using a single site catalyst, i.e., a catalyst the transition metal components of which is an organometallic compound and at least one ligand of which has a cyclopentadienyl anion structure through which such ligand bondingly coordinates to the transition metal cation. This type of catalyst is also known as "metallocene" catalyst. Metallocene catalysts are for example described in U.S. Patent Nos. 5,017,714 and 5,324,820. The elastomer s may also be prepared using traditional types of heterogeneous multi-sited Ziegler-Natta catalysts.

Preferably, the amount of ethylene incorporated into the polyolefin based elastomer is at least 40 wt%. More preferably, the amount of ethylene incorporated into the polyolefin based elastomer is at least 42 wt%, for example at least 44 wt%. The amount of ethylene incorporated into the polyolefin based elastomer may typically be at most 95 wt%, for example at most 85 wt%, for example at most 75 wt%, for example at most 65 wt%, for example at most 60 wt%, for example at most 58 wt%.

The amount of the ethylene based elastomer is in the range from 15.5 to 28.3 wt%, more preferably in the range from 18.2 to 23.6 wt% based on the total amount of the polymer composition.

### Grafted polypropylene

When at least part of the hydrogen atoms on the main chain of a polypropylene are substituted by a functional group, the polypropylene becomes a grafted polypropylene.

The grafted polypropylene in the present application is preferably a maleic anhydride grafted polypropylene. Preferably the grafted polypropylene comprises from 0.1 to 3.0 wt.% of maleic anhydride functionalities based on the total amount of the grafted polypropylene.

Maleic anhydride grafted polypropylenes are known in the art and for example available from ExxonMobil under the trade name Exxelor^{™} PO1015 and Exxelor^{™} PO1020.

It is preferred that the grafted polypropylene is (semi) crystalline.

The MFI of the grafted polypropylene is preferably in the range from 150 to 600 dg/min, more preferably in the range from 290 to 460 dg/min as measured according to ISO1133-1:2011 at 230°C/2.16kg.

The amount of the grafted polypropylene is in the range from 1.2 to 2.9 wt% based on the total amount of the polymer composition. The inventor of the present application surprisingly found this amount of grafted polypropylene leads to improved falling weight resistance at low temperature.

### Optional additives

The polymer composition may contain the usual additives, for instance nucleating agents and clarifiers, stabilizers, release agents, peroxides, plasticizers, anti-oxidants, lubricants, antistatics, cross linking agents, scratch resistance agents, flame retardants, blowing agents, acid scavengers, recycling additives, anti-microbials, anti-fogging additives, slip additives, antiblocking additives, polymer processing aids and the like. Such additives are well known in the art. The skilled person will know how to choose the type and amount of additives such that they do not detrimentally influence the aimed properties.

The present invention further relates to a process for the preparation of the polymer composition.

The polymer composition according to the invention can be prepared by a process known in the art for the preparation of a fiber reinforced composition, for instance: a pultrusion process, a wire-coating process as described in EP 0921919 B1 and EP 0994978 B1, or compounding. The polymer composition prepared in such process is in pellet form.

The present invention further relates to an antenna housing comprising the polymer composition according to the invention, the amount of the polymer composition is at least 95 wt%, preferably at least 98 wt%, more preferably 100 wt% of the total amount of the antenna housing.

The present invention further relates to a process for the preparation of an antenna housing comprising the following sequential steps:
- Providing the polymer composition according to the invention in pellet form.
- Injection molding the polymer composition from the previous step into an antenna housing.

The present invention further relates to the use of the polymer composition according to the invention in an antenna housing.

### Experiment

### Material

### Polypropylene

Heterophasic propylene copolymer 1 (HECO 1) used for the preparation of samples is commercially available from Sinopec. HECO 1 has an MFI of 35 dg/min as measured according to ISO1133-1:2011 at 230°C/2.16kg. HECO 1 consist of a propylene homopolymer as matrix and an ethylene-propylene copolymer as dispersed phase, the amount of the dispersed phase in HECO 1 is 16 wt% based on the total amount of HECO 1, the amount of moieties derived from ethylene is 8 wt% based on the total amount of HECO 1.

Heterophasic propylene copolymer 2 (HECO 2) used for the preparation of samples is commercially available from SABIC. HECO 2 has an MFI of 70 dg/min as measured according to ISO1133-1:2011 at 230°C/2.16kg. HECO1 consist of a propylene homopolymer as matrix and an ethylene-propylene copolymer as dispersed phase, the amount of the dispersed phase in HECO 2 is 17.2 wt% based on the total amount of HECO 2, the amount of moieties derived from ethylene is 7.8 wt% based on the total amount of HECO 2.

Exxelor PO1020 (PO1020) is a maleic anhydride grafted polypropylene commercially available from ExxonMobil. It has a MFI of 430 dg/min as measured according to ISO1133-1:2011 at 230°C/2.16kg

Several ethylene based elastomer were used in the example, there commercial names, supplier and properties can be found in the table below.

**Table 1 Information of POEs**

| Code | Supplier | Grade name | Shore A hardness (ASTM D2240-15, 1s) | Density (g/cm3, ASTM D792-13) | Melt flow index (dg/min, ISO1133-1:2011,190°C, 2.16kg) |
|---|---|---|---|---|---|
| POE 1 | SABIC | C1055D | 55 | 0.857 | 1.0 |
| POE 2 | SABIC | C5070D | 74 | 0.868 | 0.5 |
| POE 3 | Mitsui | DF605 | 58 | 0.861 | 0.5 |

### Stabilizers and impregnating agent:

The stabilizers used in the examples is 3.1 wt%. The impregnating agent used in the examples is the same as the one used in WO2009/080281A1, the amount of the impregnating agent is 2.65 wt%. The amounts of additives and the impregnating agent are based on the total amount of the composition.

### Glass fibers (GF):

The glass fibres used were standard Type 30 roving SE4220, supplied by 3B as a roving package, have filament diameter of 19 microns and contain aminosilane-containing sizing composition.

### Process:

Specimens are prepared in the following sequential steps:
In a first step, HECO was melt-mixed with POE, stabilizers to prepare a thermoplastic resin in pellet form.
In a second step, polymer compositions were prepared by wire-coating process as described in the examples of WO2009/080281A1 using the thermoplastic resin obtained in the first step, glass fibers and impregnating agent. The compositional detail of the polymer compositions is given in Table 2.
In a third step, the pellets of the polymer compositions were injection molded into plaques. The dimensions of the plaques are suitable for the measurements.

### Measurement methods:

Spiral flow: Sprial flow measurements were carried out on a FANUC UH1000, the pellets obtained in the second step of the process were injected with an injection speed of 30mm/s into a spiral shaped mould and the injection process ended when the pressure of the injection reached 700 kgf/cm². After the melt cooled down, it was taken out from the mold and its length was measured. The spiral shaped mold's channel has a rectangular shape cross section with height of 2 mm and width of 15 mm.

### Falling weight impact test:

Plaques used in this measurement are with dimensions: 830*400*3 mm.

The falling weight impact test was performed on a customized machine. The customized machine comprises two parts: A weight release mechanism and a plaque support.

The weight release mechanism is able to release a metallic ball with 500 gram weight and 50 mm diameter from 2 or 1.3 m height with 0 initial velocity as a free falling object to create falling weight impact on the test plaque.

The plaque support has a square shape with one space in the centre, the outside dimension of the support is 830*400 mm and inside dimension of the dimension is 810*380 mm. The horizontal geometric centre of the outer square superposes with that of the inner square. A plaque was placed horizontally on the plaque support, the horizontal geometric centre of the plaque superposed with that of the support.

The weight release mechanism and the plaque support are positioned in a way that the falling weight impact is created perpendicularly on the plaque surface. The horizontal geometric centre of the plaque superposes with that of the impact point.

The plaque was conditioned in a freezer at -40 °C for at least 4 hours before installation on the plaque support. The whole falling impact operation is completed within 30 secs starting from taking the plaque out of the freezer.

After the falling impact, the plaque was checked visually whether a crack is present on its surface. 5 plaques were tested for each formulation and a non-crack (pass) percentage was calculated.

**Table 2 Formulation and properties of the polymer compositions**

| | unit | IE1 | IE2 | EX1 | EX2 | EX3 | EX4 | EX5 |
|---|---|---|---|---|---|---|---|---|
| HECO 1 | wt% | 46.75 | 42.75 | 47.75 | 42.75 | 42.75 | | 43.25 |
| HECO 2 | wt% | | | | | | 42.75 | |
| POE 1 | wt% | 16 | 20 | 15 | | | 20 | 20 |
| POE 2 | wt% | | | | 20 | | | |
| POE 3 | wt% | | | | | 20 | | |
| Impregnating agent | wt% | 2.65 | 2.65 | 2.65 | 2.65 | 2.65 | 2.65 | 2.65 |
| PO1020 | wt% | 1.5 | 1.5 | 1.5 | 1.5 | 1.5 | 1.5 | 1 |
| GF | wt% | 30 | 30 | 30 | 30 | 30 | 30 | 30 |
| Stabilizer | wt% | 3.1 | 3.1 | 3.1 | 3.1 | 3.1 | 3.1 | 3.1 |
| Spiral flow | cm | 35.3 | 33.3 | 35.4 | 36.2 | 30.2 | 36.9 | 33.1 |
| Falling weight impact pass rate 2m | % | 80 | 100 | 60 | 60 | 100 | 20 | 60 |
| Falling weight impact pass rate1.3m | % | 100 | 100 | 80 | 100 | 100 | 60 | 100 |

According to Table 2 IE1 and EX1, a POE amount of higher than 15.5 wt% leads to a clear higher pass rate of falling weight impact test. Comparing IE2 and EX4, a HECO having an MFI in the range of 17 to 68 dg/min as measured according to ISO1133-1:2011 at 230°C/2.16kg leads to a higher pass rate of falling weigh impact test. The comparison between IE2, EX2 and EX3 shows that POE1 having a MFI in the range from 0.8 to 36 dg/min as measured according to ISO1133-1:2011 at 190°C/2.16kg leads to improved spiral flow and falling weight impact resistance at low temperature. The comparison between IE2 and EX5 shows that PO1020 in an amount is in the range from 1.2 to 2.9 wt% leads to improved falling weight impact resistance at low temperature.

## Claims

1. A polymer composition comprising a polypropylene, an ethylene based elastomer, a grafted polypropylene and glass fiber, wherein the polypropylene has a melt flow index (MFI) in the range from 17 to 68 dg/min as measured according to ISO1133-1:2011 at 230°C/2.16kg, wherein the amount of the ethylene based elastomer is in the range from 15.5 to 28.3 wt% based on the total amount of the polymer composition, wherein the MFI of the ethylene based elastomer is in the range of 0.8 to 36 dg/min as measured according to ISO1133-1:2011 at 190°C/2.16kg wherein amount of grafted polypropylene is in the range from 1.2 to 2.9 wt% based on the total amount of the polymer composition.

2. The polymer composition according to claim 1, wherein the MFI of the polypropylene is in the range from 23 to 59 dg/min, preferably in the range from 32 to 47 dg/min as measured according to ISO1133-1:2011 at 230°C/2.16kg.

3. The polymer composition according to claim 1 or 2, wherein the polypropylene comprises an ethylene-α-olefin copolymer, wherein the amount of the ethylene α-olefin copolymer is in the range from 13 to 28 wt% based on the total amount of the polypropylene.

4. The polymer composition according to any one of the previous claims, wherein the ethylene based elastomer is selected from a group consisting of ethylene-butene copolymer, ethylene-hexene copolymer, ethylene-octene copolymer and mixtures thereof, preferably the polyolefin based elastomer is an ethylene-octene copolymer.

5. The polymer composition according to any one of the previous claims, wherein the shore A hardness of the ethylene based elastomer is in the range from 35 to 90, preferably in the range from 42 to 69, more preferably in the range from 47 to 60, most preferably in the range from 50 to 57 as measured according to ASTM D2240-15, 1s.

6. The polymer composition according to any one of the previous claims, wherein the grafted polypropylene is a maleic anhydrate grafted polypropylene.

7. The polymer composition according to any one of the previous claims, wherein the diameter of the glass fibers is preferably in the range from 5 to 50 microns, preferable from 10 to 30 microns, more preferable from 15 to 25 microns.

8. The polymer composition according to any one of the previous claims, wherein the amount of the glass fiber is in the range from 16 to 42 wt%, preferably in the range from 25 to 34 wt% based on the total amount of the polymer composition.

9. The polymer composition according to any one of the previous claims, wherein the amount of the polypropylene is in the range from 26 to 76 wt%, preferably in the range from 33 to 62 wt%, more preferably in the range from 39 to 53 wt% based on the total amount of the polymer composition.

10. The polymer composition according to any one of the previous claims, wherein the density of the ethylene based elastomer is preferably in the range from 0.845 to 0.883 g/cm3, preferably in the range from 0.848 to 0.865 g/cm3, more preferably in the range from 0.853 to 0.860 g/cm3 as measured according to ASTM D792-13.

11. The polymer composition according to any one of the previous claims, wherein the MFI of the ethylene based elastomer is in the range from 0.9 to 23 dg/min, preferably in the range from 0.9 to 13 dg/min, more preferably in the range from 0.9 to 4.8 dg/min as measured according to ISO1133-1:2011 at 190°C/2.16kg.

12. The polymer composition according to any one of the previous claims, wherein the grafted polypropylene has an MFI in the range from 150 to 600 dg/min, preferably in the range from 290 to 460 dg/min as measured according to ISO1133-1:2011 at 230°C/2.16kg.

13. An antenna housing comprising the polymer composition of any one of the previous claims wherein the amount of the polymer composition is at least 95 wt%, preferably at least 98 wt%, more preferably 100 wt% of the total amount of the antenna housing.

14. Process for the preparation of an antenna housing comprising the following sequential steps:
- Providing the polymer composition of any one of claims 1 to 12 in pellet form;
- Injection moulding the polymer composition from the previous step into an antenna housing.

15. Use of the polymer composition of any one of claims 1 to 12 in an antenna housing.

## Patentansprüche

1. Polymerzusammensetzung umfassend ein Polypropylen, ein Elastomer auf Ethylenbasis, ein gepfropftes Polypropylen und Glasfaser, wobei das Polypropylen einen Schmelzflussindex (MFI) im Bereich von 17 bis 68 dg/min aufweist, gemessen gemäß ISO1133-1:2011 bei 230 °C/2,16 kg, wobei die Menge des Elastomers auf Ethylenbasis im Bereich von 15,5 bis 28,3 Gew.-%, bezogen auf die Gesamtmenge der Polymerzusammensetzung, liegt, wobei der MFI des Elastomers auf Ethylenbasis im Bereich von 0,8 bis 36 dg/min, gemessen gemäß ISO1133-1:2011 bei 190 °C/2,16 kg, liegt, wobei die Menge an gepfropftem Polypropylen im Bereich von 1,2 bis 2,9 Gew.-%, bezogen auf die Gesamtmenge der Polymerzusammensetzung, liegt.

2. Polymerzusammensetzung nach Anspruch 1, wobei der MFI des Polypropylens im Bereich von 23 bis 59 dg/min, bevorzugt im Bereich von 32 bis 47 dg/min, liegt, gemessen gemäß ISO1133-1:2011 bei 230 °C/2,16 kg.

3. Polymerzusammensetzung nach Anspruch 1 oder 2, wobei das Polypropylen ein Ethylen-α-Olefin-Copolymer umfasst, wobei die Menge des Ethylen-α-Olefin-Copolymers im Bereich von 13 bis 28 Gew.-%, bezogen auf die Gesamtmenge des Polypropylens, liegt.

4. Polymerzusammensetzung nach einem der vorhergehenden Ansprüche, wobei das Elastomer auf Ethylenbasis aus einer Gruppe ausgewählt ist, die aus Ethylen-Buten-Copolymer, Ethylen-Hexen-Copolymer, Ethylen-Octen-Copolymer und Mischungen davon besteht, wobei es sich bei dem Elastomer auf Polyolefinbasis bevorzugt um ein Ethylen-Octen-Copolymer handelt.

5. Polymerzusammensetzung nach einem der vorhergehenden Ansprüche, wobei die Shore-A-Härte des Elastomers auf Ethylenbasis im Bereich von 35 bis 90, bevorzugt im Bereich von 42 bis 69, bevorzugter im Bereich von 47 bis 60, am meisten bevorzugt im Bereich von 50 bis 57, liegt, gemessen gemäß ASTM D2240-15, 1s.

6. Polymerzusammensetzung nach einem der vorhergehenden Ansprüche, wobei es sich bei dem gepfropften Polypropylen um ein mit Maleinsäureanhydrid gepfropftes Polypropylen handelt.

7. Polymerzusammensetzung nach einem der vorhergehenden Ansprüche, wobei der Durchmesser der Glasfaser bevorzugt im Bereich von 5 bis 50 Mikrometer, bevorzugt von 10 bis 30 Mikrometer, bevorzugter von 15 bis 25 Mikrometer, liegt.

8. Polymerzusammensetzung nach einem der vorhergehenden Ansprüche, wobei die Menge der Glasfaser im Bereich von 16 bis 42 Gew.-%, bevorzugt im Bereich von 25 bis 34 Gew.-%, bezogen auf die Gesamtmenge der Polymerzusammensetzung, liegt.

9. Polymerzusammensetzung nach einem der vorhergehenden Ansprüche, wobei die Menge des Polypropylens im Bereich von 26 bis 76 Gew.-%, bevorzugt im Bereich von 33 bis 62 Gew.-%, bevorzugter im Bereich von 39 bis 53 Gew.-%, bezogen auf die Gesamtmenge der Polymerzusammensetzung, liegt.

10. Polymerzusammensetzung nach einem der vorhergehenden Ansprüche, wobei die Dichte des Elastomers auf Ethylenbasis bevorzugt im Bereich von 0,845 bis 0,883 g/cm3, bevorzugt im Bereich von 0,848 bis 0,865 g/cm3, bevorzugter im Bereich von 0,853 bis 0,860 g/cm3, gemessen gemäß ASTM D792-13, liegt.

11. Polymerzusammensetzung nach einem der vorhergehenden Ansprüche, wobei der MFI des Elastomers auf Ethylenbasis im Bereich von 0,9 bis 23 dg/min, bevorzugt im Bereich von 0,9 bis 13 dg/min, bevorzugter im Bereich von 0,9 bis 4,8 dg/min, gemessen gemäß IS01133-1:2011 bei 190 °C/2,16 kg, liegt.

12. Polymerzusammensetzung nach einem der vorhergehenden Ansprüche, wobei das gepfropfte Polypropylen einen MFI im Bereich von 150 bis 600 dg/min, bevorzugt im Bereich von 290 bis 460 dg/min, gemessen gemäß IS01133-1:2011 bei 230 °C/2,16 kg, aufweist.

13. Antennengehäuse umfassend die Polymerzusammensetzung nach einem der vorhergehenden Ansprüche, wobei die Menge der Polymerzusammensetzung mindestens 95 Gew.-%, bevorzugt mindestens 98 Gew.-%, bevorzugter 100 Gew.-%, der Gesamtmenge des Antennengehäuses beträgt.

14. Verfahren für die Herstellung eines Antennengehäuses umfassend die folgenden aufeinanderfolgenden Schritte:
- Bereitstellen der Polymerzusammensetzung nach einem der Ansprüche 1 bis 12 in Pelletform;
- Spritzgießen der Polymerzusammensetzung aus dem vorhergehenden Schritt zu einem Antennengehäuse.

15. Verwendung der Polymerzusammensetzung nach einem der Ansprüche 1 bis 12 in einem Antennengehäuse.

## Revendications

1. Composition polymère comprenant un polypropylène, un élastomère à base d'éthylène, un polypropylène greffé et de la fibre de verre, dans laquelle le polypropylène présente un indice de fluidité (MFI) dans la plage allant de 17 à 68 dg/min tel que mesuré selon la norme ISO1133-1:2011 à 230°C/2,16 kg, dans laquelle la quantité de l'élastomère à base d'éthylène se trouve dans la plage allant de 15,5 à 28,3% en poids par rapport à la quantité totale de la composition polymère, dans laquelle le MFI de l'élastomère à base d'éthylène se trouve dans la plage allant de 0,8 à 36 dg/min, tel que mesuré selon la norme ISO1133-1:2011 à 190°C/2,16 kg, dans laquelle la quantité de polypropylène greffé se trouve dans la plage allant de 1,2 à 2,9% en poids par rapport à la quantité totale de la composition polymère.

2. Composition polymère selon la revendication 1, dans laquelle le MFI du polypropylène se trouve dans la plage allant de 23 à 59 dg/min, de préférence dans la plage allant de 32 à 47 dg/min tel que mesuré selon la norme ISO1133-1:2011 à 230°C/2,16 kg.

3. Composition polymère selon la revendication 1 ou 2, dans laquelle le polypropylène comprend un copolymère éthylène-α-oléfine, dans laquelle la quantité du copolymère éthylène-α-oléfine se trouve dans la plage allant de 13 à 28% en poids par rapport à la quantité totale du polypropylène.

4. Composition polymère selon l'une quelconque des revendications précédentes, dans laquelle l'élastomère à base d'éthylène est choisi dans un groupe constitué du copolymère éthylène-butène, du copolymère éthylène-hexène, du copolymère éthylène-octène et de leurs mélanges, de préférence l'élastomère à base de polyoléfine est un copolymère éthylène-octène.

5. Composition polymère selon l'une quelconque des revendications précédentes, dans laquelle la dureté Shore A de l'élastomère à base d'éthylène se trouve dans la plage allant de 35 à 90, de préférence dans la plage allant de 42 à 69, plus préférentiellement dans la plage allant de 47 à 60, idéalement dans la plage allant de 50 à 57, telle que mesurée selon la norme ASTM D2240-15, 1s.

6. Composition polymère selon l'une quelconque des revendications précédentes, dans laquelle le polypropylène greffé est un polypropylène greffé à l'anhydrate maléique.

7. Composition polymère selon l'une quelconque des revendications précédentes, dans laquelle le diamètre des fibres de verre se trouve de préférence dans la plage allant de 5 à 50 microns, de préférence de 10 à 30 microns, plus préférentiellement de 15 à 25 microns.

8. Composition polymère selon l'une quelconque des revendications précédentes, dans laquelle la quantité de la fibre de verre se trouve dans la plage allant de 16 à 42% en poids, de préférence dans la plage allant de 25 à 34% en poids par rapport à la quantité totale de la composition polymère.

9. Composition polymère selon l'une quelconque des revendications précédentes, dans laquelle la quantité du polypropylène se trouve dans la plage allant de 26 à 76% en poids, de préférence dans la plage allant de 33 à 62% en poids, plus préférentiellement dans la plage allant de 39 à 53% en poids par rapport à la quantité totale de la composition polymère.

10. Composition polymère selon l'une quelconque des revendications précédentes, dans laquelle la densité de l'élastomère à base d'éthylène se trouve de préférence dans la plage allant de 0,845 à 0,883 g/cm3, de préférence dans la plage allant de 0,848 à 0,865 g/cm3, plus préférentiellement dans la plage allant de 0,853 à 0,860 g/cm3 telle que mesurée selon la norme ASTM D792-13.

11. Composition polymère selon l'une quelconque des revendications précédentes, dans laquelle le MFI de l'élastomère à base d'éthylène se trouve dans la plage allant de 0,9 à 23 dg/min, de préférence dans la plage allant de 0,9 à 13 dg/min, plus préférentiellement dans la plage allant de 0,9 à 4,8 dg/min, tel que mesuré selon la norme ISO1133-1:2011 à 190°C/2,16 kg.

12. Composition polymère selon l'une quelconque des revendications précédentes, dans laquelle le polypropylène greffé présente un MFI dans la plage allant de 150 à 600 dg/min, de préférence dans la plage allant de 290 à 460 dg/min tel que mesuré selon la norme ISO1133-1:2011 à 230°C/2,16kg.

13. Boîtier d'antenne comprenant la composition polymère selon l'une quelconque des revendications précédentes, dans lequel la quantité de la composition polymère est d'au moins 95% en poids, de préférence d'au moins 98% en poids, plus préférentiellement de 100% en poids de la quantité totale du boîtier d'antenne.

14. Procédé de préparation d'un boîtier d'antenne comprenant les étapes séquentielles suivantes :
- Fourniture de la composition polymère selon l'une quelconque des revendications 1 à 12 sous forme de granulés ;
- Moulage par injection de la composition polymère issue de l'étape précédente pour obtenir un boîtier d'antenne.

15. Utilisation de la composition polymère selon l'une quelconque des revendications 1 à 12 dans un boîtier d'antenne.
